(19) **Europäisches Patentamt European Patent Office Office européen des brevets**

(11) **EP 3 227 860 B1**

(12) **FASCICULE DE BREVET EUROPEEN**

(45) Date de publication et mention de la délivrance du brevet:
**24.04.2024 Bulletin 2024/17**

(21) Numéro de dépôt: **15810694.8**

(22) Date de dépôt: **02.12.2015**

(51) Classification Internationale des Brevets (IPC):
**G06T 7/277** (2017.01)

(52) Classification Coopérative des Brevets (CPC):
**G06T 7/277;** G06T 2207/30241; G06T 2207/30244

(86) Numéro de dépôt international:
**PCT/FR2015/053303**

(87) Numéro de publication internationale:
**WO 2016/087784 (09.06.2016 Gazette 2016/23)**

(54) **PROCÉDÉ D'ESTIMATION DU MOUVEMENT D'UN PORTEUR PAR RAPPORT À UN ENVIRONNEMENT ET DISPOSITIF DE CALCUL POUR SYSTÈME DE NAVIGATION**

VERFAHREN ZUR SCHÄTZUNG DER BEWEGUNG EINES TRÄGERS IN BEZUG AUF EINE UMGEBUNG UND BERECHNUNGSVORRICHTUNG FÜR NAVIGATIONSSYSTEM

METHOD OF ESTIMATING THE MOTION OF A CARRIER WITH RESPECT TO AN ENVIRONMENT AND CALCULATION DEVICE FOR NAVIGATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2014 FR 1461835**

(43) Date de publication de la demande:
**11.10.2017 Bulletin 2017/41**

(73) Titulaire: **Airbus Defence and Space SAS 31402 Toulouse Cedex 4 (FR)**

(72) Inventeur: **POLLE, Bernard 31650 Saint-Orens (FR)**

(74) Mandataire: **Plasseraud IP 66, rue de la Chaussée d'Antin 75440 Paris Cedex 09 (FR)**

(56) Documents cités:
**FR-A1- 2 964 774 US-A1- 2007 288 141**

- **"FINAL REPORT Navigation for Planetary Approach & Landing", , 1 mai 2006 (2006-05-01), XP055224800, Extrait de l'Internet: URL:http://emits.sso.esa.int/emits-doc/EST EC/AO6080-RD5-NPAL_Final_Report.pdf [extrait le 2015-10-30]**

- **Thomas Voirin ET AL: "CHALLENGES OF PINPOINT LANDING FOR PLANETARY EXPLORATION : THE LION ABSOLUTE VISION-BASED NAVIGATION SYSTEM STEP-WISE VALIDATION APPROACH", Toulouse, 1 juin 2013 (2013-06-01), XP055224802, Extrait de l'Internet: URL:http://elib.dlr.de/94968/1/8A.9 Voirin Challenges of pin-point landing for planetary landing the LION absolute vision-based navigation approach and experimental results.pdf [extrait le 2015-10-30]**
- **G Flandin ET AL: "VISION BASED NAVIGATION FOR PLANETARY EXPLORATION", , 4 février 2009 (2009-02-04), XP055224806, Extrait de l'Internet: URL:http://emits.sso.esa.int/emits-doc/EST EC/AO6080-RD6-VisNav-paper.pdf [extrait le 2015-10-30]**
- **Bernard Polle ET AL: "AUTONOMOUS VISION-BASED NAVIGATION DEMONSTRATION", , 5 juin 2008 (2008-06-05), XP055224809, Extrait de l'Internet: URL:ftp://ftp.elet.polimi.it/users/Marco.L overa/ESAGNC08/Posters/P08/05_Villien.pdf [extrait le 2015-10-30]**

**(Cont. page suivante)**

- **HELMICK D M ET AL: "Path Following using Visual Odometry for a Mars Rover in High-Slip Environments", AEROSPACE CONFERENCE, 2004. PROCEEDINGS. 2004 IEEE, IEEE, PISCATAWAY, NJ, USA, 6 mars 2004 (2004-03-06), XP002464384, ISBN: 978-0-7803-8155-1**

# EP 3 227 860 B1

**Description**

## DOMAINE TECHNIQUE

La présente invention appartient au domaine de la navigation de porteurs du type véhicules, robots, etc. Plus particulièrement, la présente invention concerne l'estimation du mouvement d'un porteur par rapport à un environnement vis-à-vis duquel ce porteur se déplace.

L'environnement est par exemple la surface d'un corps céleste, un autre véhicule, un relief structuré (ville, bâtiment), etc.

Le porteur doit pouvoir se déplacer de façon autonome par rapport à cet environnement, sans connaissance a priori de celui-ci, ou avec une connaissance a priori réduite. Pour cela, il a besoin de déterminer son mouvement par rapport à cet environnement.

## ÉTAT DE LA TECHNIQUE

Le mouvement du porteur est déterminé au moyen d'un système de navigation comprenant un ou plusieurs senseurs de navigation embarqués à bord dudit porteur. Le système de navigation détermine le mouvement par un traitement adapté des mesures fournies par les senseurs de navigation. Les senseurs de navigation peuvent être de différents types, par exemple récepteur GPS, accéléromètre, odomètre, gyroscope, radar doppler, etc.

L'estimation du mouvement du porteur par rapport à l'environnement s'effectue en mettant en oeuvre un filtre de navigation combinant un modèle de déplacement (par exemple les équations de la cinématique du porteur) avec les mesures de navigation fournies par les senseurs de navigation.

Toutefois, il existe de nombreux scénarios dans lesquels le système de navigation ne permet pas à lui seul d'estimer correctement le mouvement du porteur relativement à l'environnement.

C'est le cas par exemple d'un porteur à roues évoluant à la surface d'un terrain et muni d'une odométrie mesurant la rotation des roues. Les mesures odométriques ne suffisent pas à reconstituer le mouvement du porteur lorsque celui-ci dérape ou glisse sur le terrain.

C'est également le cas d'un porteur se déplaçant par rapport à un corps céleste et possédant une centrale de navigation inertielle fournissant des mesures de vitesses angulaires et d'accélérations linéaires suivant au moins trois axes indépendants. Un filtre de navigation traite ces mesures à haute cadence (typiquement 150 Hertz) en utilisant un modèle de champ de gravité local, par exemple à travers un filtre de Kalman étendu, afin de restituer position et vitesse du porteur par rapport au corps céleste. Les dérives inévitables des senseurs de navigation inertiels et la méconnaissance initiale de la position du porteur par rapport à l'environnement sont autant de sources d'erreurs sur l'estimation du mouvement dudit porteur, en particulier sur l'estimation de sa position par rapport à l'environnement. Ces erreurs s'accumulent et se propagent dans le temps sur les estimations suivantes.

C'est également le cas d'un porteur muni d'un récepteur GPS. Bien qu'un tel récepteur GPS soit généralement adapté à fournir une estimation précise de la position du porteur (typiquement au mètre près dans certains cas), cette précision se dégrade en cas de perte ou de corruption des mesures GPS. Une telle perte ou corruption des mesures GPS peut se produire notamment du fait d'obstacles sur un canal radio entre le porteur et l'émetteur GPS et/ou du fait de phénomènes de multi-trajet sur ledit canal radio.

Afin de remédier à ces limitations, il est connu de mettre en oeuvre un système de vision et de munir le porteur d'un ou de plusieurs senseurs de vision, qui réalisent l'acquisition d'images à deux dimensions (images 2D) de l'environnement.

Les informations provenant du système de vision sont traitées par le système de navigation. Pour cela, le filtre de navigation est augmenté pour prendre en compte les mesures fournies par le système de vision.

De nombreuses implémentations numériques du filtre de navigation augmenté peuvent être élaborées, par exemple, filtre de Kalman, filtre de Kalman étendu, filtre d'information, filtre particulaire, filtre bayésien, etc.

Des exemples de tels systèmes de navigation augmentés sont par exemple décrits, dans le contexte de porteurs du type véhicules spatiaux, dans les publications scientifiques suivantes :

- « Navigation for Planetary Approach and Landing », B. Frapard et al, 5th International ESA Conférence on Guidance Navigation and Control Systems, 22-25 October 2002, Frascati, Italy ;
- « Autonomous Navigation Concepts for Interplanetary Missions », B. Polie et al, IFAC Symposium on Automatic Control in Aerospace 14-18 Juin 2004, Saint Petersburg, Russia ;
- « Mars Sample Return : Optimising the Descent and Soft Landing for an Autonomous Martian Lander », X. Sembély et al, Symposium on Atmospheric Reentry Vehicles and Systems, 23rd March 2005, Arcachon, France ;
- « Vision Navigation for European Landers and the NPAL Project », G. Bodineau et al, IFAC Symposium on Automatic Control in Aerospace, 25-29 Juin 2007, Toulouse, France.

Dans ces publications scientifiques, on considère un système de navigation inertielle basé sur des mesures de navigation parmi lesquelles des mesures d'accélérations linéaires du véhicule selon les trois axes d'un repère de référence lié au véhicule, et des mesures de vitesses angulaires du véhicule selon ces trois axes. Le vecteur d'états du filtre de navigation inertielle comporte des états relatifs au mouvement tels que la position, vitesse et angles d'attitude du véhicule dans un repère de référence lié à l'environnement. Le filtre de navigation propage (étape de prédiction) une estimation du vecteur d'états en prenant en compte un modèle de champ de gravité local, ainsi que la covariance des erreurs d'estimation de ces états. Le filtre de navigation recale (étape de mise à jour) l'estimation du vecteur d'états, et par conséquent du mouvement du véhicule à partir des mesures de navigation.

Dans ces publications scientifiques, le système de navigation inertielle est combiné avec un système de vision constitué d'une caméra embarquée dans le véhicule fournissant des images 2D de l'environnement à une fréquence typique de l'ordre de 10 à 100 Hertz.

Dans une image, des zones caractéristiques de l'environnement sont identifiées. Une zone caractéristique de l'environnement est une zone dont la représentation dans l'image, en tant qu'ensemble de pixels, présente la propriété de pouvoir être retrouvée d'une image à l'autre, par exemple par corrélation d'image ou par reconnaissance de forme. Une zone caractéristique de l'image peut être par exemple une vignette de quelques pixels à quelques dizaines de pixels dans lesquelles il existe des variations de luminance ou de texture ou de contraste dans au moins deux directions.

On suit les zones caractéristiques de l'environnement d'une image à l'autre par corrélation d'image. On associe à chaque zone caractéristique un point sur l'image, dit « point caractéristique de l'image » Mi. Le point caractéristique Mi est par exemple le barycentre radiométrique ou géométrique de la vignette de pixels représentant cette zone caractéristique, ou un point particulier de cette zone caractéristique. Le déplacement des points caractéristiques Mi d'une image à l'autre est représentatif du mouvement de translation et de rotation du véhicule par rapport à l'environnement.

Le mouvement du véhicule en position et attitude est estimé en augmentant le vecteur d'états du filtre de navigation inertielle avec les coordonnées, dans un repère de référence, de points caractéristiques M'$_i$ de l'environnement représentés par les points caractéristiques Mi de l'image. Un repère de référence lié au porteur est désigné par (O,X,Y,Z), et est par exemple défini en considérant O comme étant le centre du plan focal de la caméra, Z comme étant l'axe optique de la caméra, et (X,Y) comme étant le plan focal de la caméra.

Pour estimer le vecteur d'états du filtre de navigation, on utilise, outre les mesures du système de navigation inertielle, 2M mesures correspondant aux directions des vecteurs OM'i dans le repère de référence.

Le filtre de navigation étant ainsi augmenté tant au niveau des états qu'au niveau des mesures, on estime le vecteur d'états du filtre de navigation en fonction d'un modèle d'évolution temporelle des états du système et un modèle des différentes mesures.

Toutefois, l'inconvénient principal des systèmes de navigation utilisant également des mesures issues d'images réside dans le fait que l'estimation de l'état du porteur, au moyen d'un filtre de navigation ainsi augmenté d'états et de mesures associés aux points caractéristiques M'$_i$ nécessite une importante puissance de calcul.

Il est connu du brevet FR 2964774 B1 de calculer à partir des coordonnées des points caractéristiques identifiées dans un triplet d'images, au moins une mesure condensée représentative du mouvement du porteur au cours de l'acquisition dudit triplet d'images. Le filtre de navigation effectue alors une fusion entre les mesures de navigation et l'au moins une mesure condensée, et non plus une fusion entre les mesures de navigation et les coordonnées de tous les points caractéristiques. La quantité de calculs nécessaires est donc grandement réduite, tout en améliorant les performances de l'estimation du mouvement du porteur, qui bénéficie également des informations déductibles des images acquises par le senseur de vision.

Toutefois, la solution décrite dans le brevet FR 2964774 B1 se heurte à un problème d'ambiguïté propre à la vision 2D. En effet, lorsque la scène observée est sensiblement plane, il existe pour certaines trajectoires du porteur, notamment sensiblement orthogonales à ladite scène plane, plusieurs interprétations possibles du mouvement conduisant à la même observation, voire à une dégénérescence de la solution ne permettant pas de calculer de mesure condensée. Ce problème d'ambiguïté se pose tout particulièrement dans le cas d'un scénario d'atterrissage du porteur sur un corps céleste.

## EXPOSÉ DE L'INVENTION

La présente invention a pour objectif de proposer un procédé d'estimation du mouvement d'un porteur qui permet d'exploiter des mesures obtenues à partir d'images de l'environnement, tout en limitant l'impact d'un point de vue complexité de traitement et en améliorant la robustesse de l'estimation par rapport aux solutions connues de l'art antérieur.

Selon un premier aspect, la présente invention concerne un procédé d'estimation du mouvement d'un porteur par rapport à un environnement vis-à-vis duquel ledit porteur se déplace, le porteur embarquant au moins un senseur de navigation et au moins un senseur de vision produisant des images de l'environnement, ledit procédé comportant des étapes de :

- identification, dans des images acquises par le senseur de vision, d'éléments caractéristiques des images représentant des éléments caractéristiques de l'environnement,
- calcul d'au moins une mesure condensée en fonction d'éléments caractéristiques d'au moins deux images acquises à des instants différents, l'au moins une mesure condensée étant représentative de caractéristiques du mouvement du porteur au cours de l'acquisition desdites au moins deux images, l'au moins une mesure condensée étant représentative :

> o d'un rapport des distances parcourues par le porteur entre les instants d'acquisition de deux paires d'images d'un triplet d'images, en fonction d'éléments caractéristiques des images dudit triplet représentant des éléments caractéristiques de l'environnement visibles sur chacune des trois images dudit triplet, et/ou
> o d'une direction de déplacement du porteur et/ou d'une rotation du porteur entre les instants d'acquisition d'une paire d'images, en fonction d'éléments caractéristiques de cette paire d'images représentant des éléments caractéristiques de l'environnement visibles sur chacune des deux images de cette paire,

- estimation du mouvement du porteur par un filtre d'estimation, dit « filtre de navigation », en fonction de mesures de navigation réalisées par le senseur de navigation et en fonction de l'au moins une mesure condensée,

dans lequel l'au moins une mesure condensée est calculée en fonction en outre d'une estimation a priori du mouvement fournie par le filtre de navigation.

Ainsi, le procédé d'estimation repose sur le calcul d'au moins une mesure condensée, représentative du mouvement du porteur, à partir des éléments caractéristiques identifiés dans les images, de sorte que la quantité d'informations issues de images, traitées par le filtre de navigation est grandement réduite par rapport à l'ensemble des éléments caractéristiques. Pour améliorer la robustesse de l'estimation, et en particulier lever les ambiguïtés inhérentes à la vision 2D, le calcul de l'au moins une mesure condensée prend en outre en compte une estimation a priori du mouvement, qui est avantageusement estimée par le filtre de navigation en fonction des mesures de navigation réalisées par le senseur de navigation. Par conséquent, l'au moins une mesure condensée est calculée d'une part en fonction des éléments caractéristiques identifiés dans les images et, d'autre part, en fonction de l'estimation a priori du mouvement fournie par le filtre de navigation.

Dans des modes particuliers de mise en oeuvre, le procédé d'estimation peut comporter en outre l'une ou plusieurs des caractéristiques suivantes, prises isolément ou selon toutes les combinaisons techniquement possibles.

Dans des modes particuliers de mise en oeuvre, le procédé d'estimation comporte une estimation de l'erreur commise sur l'au moins une mesure condensée et une estimation de la relation entre l'erreur commise sur l'estimation a priori dudit mouvement et l'erreur commise sur l'au moins une mesure condensée, et le filtre de navigation estime le mouvement du porteur en fonction en outre de l'estimation de l'erreur commise sur l'au moins une mesure condensée et en fonction de la relation entre l'erreur commise sur l'estimation a priori dudit mouvement et l'erreur commise sur l'au moins une mesure condensée.

De telles dispositions permettent d'améliorer la précision de l'estimation. En effet, du fait que l'au moins une mesure condensée est calculée en fonction d'une estimation a priori du mouvement fournie par le filtre de navigation, et du fait que le filtre de navigation estime le mouvement en fonction de l'au moins une mesure condensée, on comprend que l'erreur commise par le filtre de navigation, sur l'estimation a priori, est réinjectée dans ledit filtre de navigation par le biais de l'au moins une mesure condensée. Une telle réinjection de l'erreur commise peut s'avérer problématique, et dégrader dans certains cas la précision de l'estimation du mouvement. Une telle dégradation est ici évitée grâce à la prise en compte de l'estimation de l'erreur commise sur l'au moins une mesure condensée et de la relation entre l'erreur commise sur l'estimation a priori dudit mouvement et l'erreur commise sur l'au moins une mesure condensée.

Dans des modes particuliers de mise en oeuvre, l'au moins une mesure condensée est calculée en fonction en outre d'une estimation de l'erreur commise sur l'estimation a priori du mouvement.

Dans des modes particuliers de mise en oeuvre, le calcul de l'au moins une mesure condensée met en oeuvre une estimation au sens des moindres carrés.

Dans des modes particuliers de mise en oeuvre, le filtre de navigation est un filtre de Kalman.

Dans des modes particuliers de mise en oeuvre, l'estimation a priori du mouvement du porteur consiste en une estimation de la rotation du porteur et/ou en une estimation de la direction de translation du porteur entre les instants d'acquisition des images.

Dans des modes particuliers de mise en oeuvre, l'estimation a priori du mouvement du porteur consiste en une estimation de la rotation du porteur, d'une estimation de la direction de translation du porteur entre les instants d'acquisition des images ainsi que d'une estimation d'un rapport des distances parcourues par le porteur entre les instants d'acquisition de paires d'images successives à un facteur d'échelle près.

Selon un second aspect, la présente invention concerne un produit programme d'ordinateur comportant un ensemble d'instructions de code de programme qui, lorsqu'elles sont exécutées par un processeur, mettent en oeuvre un procédé d'estimation du mouvement d'un porteur selon l'un quelconque des modes de mise en oeuvre de l'invention.

Selon un troisième aspect, la présente invention concerne un dispositif de calcul pour système de navigation d'un porteur embarquant au moins un senseur de navigation et au moins un senseur de vision, ledit dispositif comportant des moyens configurés pour mettre en oeuvre un procédé d'estimation du mouvement du porteur selon l'un quelconque des modes de mise en oeuvre de l'invention.

## PRÉSENTATION DES FIGURES

L'invention sera mieux comprise à la lecture de la description suivante, donnée à titre d'exemple nullement limitatif, et faite en se référant aux figures qui représentent :

- Figure 1 : un diagramme représentant les principales étapes d'un procédé d'estimation du mouvement d'un porteur selon l'invention,
- Figure 2 : une représentation schématique, dans le plan focal d'un instrument d'observation, de traces virtuelles formées par des points caractéristiques suivis dans plusieurs images acquises consécutivement par ledit senseur de vision,
- Figure 3 : une représentation schématique du déplacement d'un porteur par rapport à un environnement, illustrant certaines définitions employées dans la description.

## DESCRIPTION DÉTAILLÉE DE MODES DE RÉALISATION

La présente invention concerne un procédé 10 d'estimation du mouvement d'un porteur par rapport à un environnement 20 vis-à-vis duquel ledit porteur est en mouvement.

Dans le contexte de l'invention, le terme « mouvement » est pris au sens large, c'est-à-dire tout paramètre relatif à la trajectoire en position et attitude du porteur par rapport à l'environnement 20 et/ou permettant de prévoir ladite trajectoire. L'estimation du mouvement comprend l'estimation d'au moins un parmi les paramètres suivants : position, attitude, vitesse, accélération, rotation, translation.

Le mouvement du porteur est estimé à des fins de navigation, c'est-à-dire à des fins d'estimation et de prévision de la trajectoire du porteur par rapport à l'environnement 20. L'invention est applicable à tout type de porteur dont on cherche à estimer le mouvement à des fins de navigation, tel qu'un véhicule terrestre, aérien ou spatial, un robot, un missile, etc.

L'invention est mise en oeuvre par un système de navigation exploitant des mesures de navigation effectuées par au moins un senseur de navigation embarqué par le porteur, et des images réalisées par au moins un senseur de vision également embarqué par ledit porteur.

Chaque senseur de navigation peut être de tout type, comme par exemple récepteur GPS, accéléromètre, odomètre, gyroscope, radar doppler, etc. Un exemple préféré de combinaison de senseurs de navigation permettant l'estimation de l'ensemble du mouvement du porteur comprend une centrale inertielle mesurant les vitesses angulaires et les accélérations linéaires suivant les trois axes d'un repère de référence lié au porteur. Ladite centrale inertielle est complétée de préférence par un récepteur GPS, et/ou un altimètre, et/ou un odomètre, et/ou un radar doppler, etc.

Le système de navigation comporte un dispositif de calcul comportant par exemple au moins un processeur et au moins une mémoire électronique dans laquelle est mémorisé un produit programme d'ordinateur, sous la forme d'un ensemble d'instructions de code de programme à exécuter pour mettre en oeuvre les différentes étapes du procédé 10 d'estimation du mouvement du porteur. Dans une variante, le dispositif de commande comporte un ou des circuits logiques programmables, de type FPGA, PLD, etc., et/ou circuits intégrés spécialisés (ASIC) adaptés à mettre en oeuvre tout ou partie desdites étapes du procédé 10 d'estimation.

En d'autres termes, le dispositif de calcul comporte un ensemble de moyens configurés de façon logicielle (produit programme d'ordinateur spécifique) et/ou matérielle (FPGA, PLD, ASIC, etc.) pour mettre en oeuvre les différentes étapes du procédé 10 d'estimation du mouvement du porteur.

Le dispositif de calcul est indifféremment embarqué dans le porteur, ou déporté, c'est-à-dire localisé ailleurs que dans le porteur, par exemple dans une station sol dans le cas d'un porteur de type véhicule spatial.

Le porteur embarque au moins un senseur de vision qui peut être de tout type adapté à produire une image à deux dimensions (2D) de l'environnement, comme par exemple une caméra optique, une caméra infrarouge, un radar imageur, etc. Un senseur de vision est adapté à réaliser l'acquisition d'images de l'environnement, par exemple sous la forme d'une matrice de pixels fournissant une information physique sur la zone de l'environnement placée dans le champ de vue de ce senseur de vision. Les images sont par exemple des matrices de $1000 \times 1000$ pixels, à une fréquence typique comprise entre 10 et 100 Hertz.

Il est à noter qu'un système de vision monoculaire (par opposition notamment à stéréoscopique), comprenant un seul senseur de vision, suffit pour la mise en oeuvre de l'invention. Dans la suite de la description, on se place dans le cas non limitatif où le porteur embarque un seul senseur de vision adapté à fournir des images 2D de l'environnement. Rien n'exclut cependant, suivant d'autres exemples, d'avoir un porteur embarquant plusieurs senseurs de vision adaptés à fournir des images 2D de l'environnement et/ou embarquant au moins un senseur de vision adapté à fournir des images 3D dudit environnement.

Selon l'invention, l'estimation du mouvement du porteur est réalisée au moyen d'un filtre d'estimation, dit « filtre de navigation », qui prend en entrée les informations déterminées à partir des mesures réalisées par le ou les senseurs de navigation et par le senseur de vision, et combine lesdites informations afin d'estimer le mouvement du porteur.

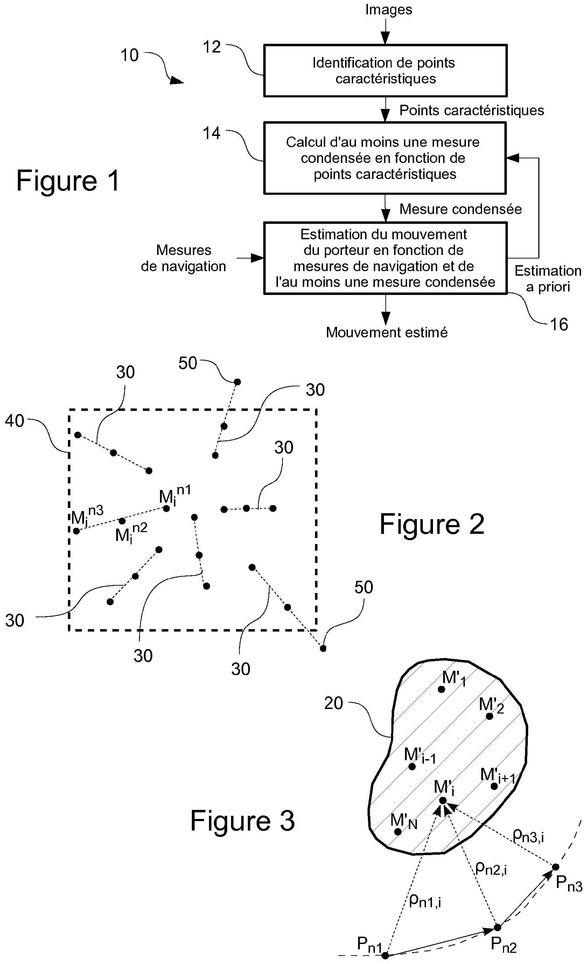

La figure 1 représente, de façon très schématique, les principales d'un procédé 10 d'estimation, basé sur l'identification de points caractéristiques de l'environnement. Tel qu'illustré par la figure 1, le procédé 10 d'estimation comporte des étapes :

- 12 identification de points caractéristiques Mi dans des images acquises par le senseur de vision, représentant des points caractéristiques de l'environnement,
- 14 calcul, en fonction de points caractéristiques des images suivis d'une image à l'autre d'au moins deux images acquises à des instants différents, d'au moins une mesure condensée représentative de caractéristiques du mouvement du porteur au cours de l'acquisition desdites au moins deux images,
- 16 estimation du mouvement par le filtre de navigation qui prend en entrée des mesures de navigation réalisées par le ou les senseurs de navigation et l'au moins une mesure condensée.

En outre, tel qu'illustré par la figure 1, le filtre de navigation fournit une estimation a priori du mouvement du porteur, et l'au moins une mesure condensée est calculée en fonction des points caractéristiques et de ladite estimation a priori du mouvement du porteur.

Il est à noter que l'estimation a priori du mouvement du porteur peut être totale ou partielle. Il est effet possible d'estimer l'ensemble du mouvement du porteur et de le fournir en entrée de l'étape 14 de calcul de l'au moins une mesure condensée, ou de n'estimer au contraire que certains paramètres dudit mouvement. Dans le cas décrit précédemment d'une scène observée sensiblement plane et d'une trajectoire du porteur sensiblement orthogonale à ladite scène plane, l'estimation a priori doit comporter une estimation de la rotation du porteur ou une estimation de la translation dudit porteur pour permettre la levée d'ambiguïté.

Certaines étapes du procédé 10 d'estimation peuvent être exécutées plusieurs fois. Notamment, on comprend que l'initialisation du procédé 10 d'estimation nécessite d'exécuter au moins deux fois l'étape 16 d'estimation du mouvement du porteur :

- une première exécution est nécessaire pour obtenir l'estimation a priori du mouvement du porteur, utilisée au cours de l'étape 14 de calcul de l'au moins une mesure condensée,
- une seconde exécution est nécessaire pour estimer le mouvement du porteur en fonction à la fois des mesures de navigation et de l'au moins une mesure condensée.

Lors de la première exécution de l'étape 16 d'estimation, pour obtenir l'estimation a priori du mouvement du porteur, le filtre de navigation peut par exemple, si aucune mesure condensée n'a encore été calculée en fonction des images 2D, ne considérer que les mesures de navigation ou bien forcer l'au moins une mesure condensée à une valeur prédéterminée.

De préférence, les étapes du procédé 10 d'estimation sont itérées. On comprend en effet que, en particulier dans le cas où il est nécessaire de lever l'ambiguïté des images 2D, la précision de l'au moins une mesure condensée sera grandement améliorée par la prise en compte de l'estimation a priori du mouvement fournie par le filtre de navigation, et que la précision de l'estimation a priori sera elle-même améliorée par la prise en compte des informations issues des images 2D, par le biais de l'au moins une mesure condensée. Par conséquent, la précision du mouvement estimé sera généralement améliorée en itérant les étapes du procédé 10 d'estimation.

En outre, les étapes du procédé 10 d'estimation sont de préférence itérées au cours du temps, afin d'assurer le suivi du mouvement au cours du temps en prenant en compte les images à mesure qu'elles sont acquises par le senseur de vision et les mesures de navigation à mesure qu'elles sont réalisées par le ou les senseurs de navigation.

Etape 12 d'identification de points caractéristiques

L'identification de points caractéristiques dans une image s'appuie sur la recherche de zones caractéristiques de l'image correspondant à des zones caractéristiques supposées fixes de l'environnement et visibles dans cette image. Par exemple, on identifie les zones caractéristiques dans une image en déterminant des vignettes de pixels adjacents qui présentent de bonnes propriétés en termes de corrélation d'image.

On considère que l'on dispose de N zones caractéristiques identifiées. Les N zones caractéristiques peuvent correspondre au nombre total de zones caractéristiques, ou à un sous-ensemble de toutes les zones caractéristiques identifiées. Dans ce dernier cas, on garde de préférence les N zones caractéristiques pour lesquelles est vérifié un critère géométrique (les zones caractéristiques sont réparties de façon sensiblement uniforme dans l'image, avantageusement pas trop proches des bords de l'image) et/ou un critère de corrélation (les N zones caractéristiques qui présentent les meilleures propriétés de corrélation).

On suit ces N zones caractéristiques d'une image à l'autre, par exemple par corrélation d'image en exploitant les bonnes propriétés de corrélation des vignettes de pixels représentant ces zones caractéristiques. On associe à chaque zone caractéristique un point sur l'image, dit « point caractéristique de l'image » Mi, i étant compris entre 1 et N. Le point caractéristique Mi de l'image est par exemple le barycentre radiométrique ou géométrique de la vignette de pixels représentant cette zone caractéristique, ou un point particulier de cette vignette de pixels. Chaque point caractéristique Mi d'une image représente un point caractéristique $M'_i$ de l'environnement, supposé fixe par rapport à l'environnement.

Etape 14 de calcul d'au moins une mesure condensée

Le procédé 10 utilise au moins deux images de l'environnement, acquises à des instants différents, pour calculer au moins une mesure condensée représentative de caractéristiques du mouvement du porteur entre les instants d'acquisition desdites au moins deux images. En d'autres termes, l'au moins une mesure condensée correspond à une estimation au moins partielle du mouvement dudit porteur entre les instants d'acquisition desdites au moins deux images considérées.

Dans la suite de la description on se place de manière non limitative dans le cas où l'au moins une mesure condensée est calculée en fonction de points caractéristiques identifiés dans un triplet d'images. Rien n'exclut cependant, suivant d'autres exemples, de considérer un nombre différent d'images ($\geq$ 2) pour calculer l'au moins une mesure condensée.

On décrit à présent des exemples non limitatifs de mesures condensées qui peuvent être calculées à partir des points caractéristiques Mi de l'image dans chacune des images du triplet d'images.

On comprend que les conventions considérées ci-après, pour les besoins de la description de modes de mise en oeuvre de l'invention, ne sont pas limitatives de l'invention qui pourrait être décrite de manière équivalente en adoptant d'autres conventions sans que l'invention en soit modifiée dans son principe.

On suppose, de manière non limitative et à des fins de clarté de l'exposé, que les instants d'acquisition des images sont des multiples d'une période temporelle constante $\Delta T$. Etant donné un instant d'acquisition initial $t_0$, on comprendra que l'image de rang n est l'image prise à l'instant $t_n = t_0 + n \cdot \Delta T$ que l'on désignera par « instant n ». De façon générale, on comprendra que si l'indice n d'une variable $W_n$ se réfère au temps, $W_n$ correspond à la valeur de cette variable $W(t)$ à l'instant $t = t_0 + n \cdot \Delta T$.

Dans la suite de la description, on se place dans le cas où l'instant courant est n. Parmi l'ensemble des images prises avant l'instant n, le triplet d'images est constitué par trois images $I_{n1}$, $I_{n2}$, $I_{n3}$ (n1 < n2 < n3), dites « images de recalage ». Les images de recalage ne sont pas nécessairement des images acquises successivement par le senseur de vision (c'est-à-dire qu'elles ne sont pas nécessairement espacées dans le temps de la période temporelle $\Delta T$), et sont de préférence des images sélectionnées parmi l'ensemble des images acquises par ledit senseur de vision de sorte à assurer, par exemple, que le porteur s'est déplacé entre lesdits d'acquisition desdites images $I_{n1}$, $I_{n2}$, $I_{n3}$ (voir par exemple le brevet FR 2964774 B1).

Tel qu'on l'a vu, les points caractéristiques Mi se déplacent d'une image à l'autre lorsque le porteur est en mouvement. Le déplacement des points caractéristiques Mi, $1 \leq i \leq N$, d'une image à l'autre est représentatif du mouvement en translation et en rotation du porteur. Le déplacement des points caractéristiques Mi d'une image à l'autre peut être représenté sous la forme de traces 30 virtuelles illustrant les trajectoires de ces points caractéristiques dans le plan focal 40 du senseur de vision.

Du fait du déplacement du porteur par rapport à l'environnement, en translation et/ou en rotation, les zones caractéristiques identifiées dans une première image ne sont pas nécessairement visibles dans les images suivantes. On comprend donc que certaines zones caractéristiques pourront « disparaître » d'une image à l'autre, tandis que de nouvelles zones caractéristiques pourront être identifiées.

La figure 2 représente un exemple de telles traces 30 dans le plan focal 40 du senseur de vision, entre les instants d'acquisition n1 et n3.

On désigne par $M_i^{n1}$, $M_i^{n2}$ et $M_i^{n3}$ les positions du point caractéristique Mi dans chacune des images $I_{n1}$, $I_{n2}$ et $I_{n3}$. La trace 30 virtuelle formée par le déplacement du point caractéristique Mi est formée par les positions $M_i^{n1}$, $M_i^{n2}$ et $M_i^{n3}$ représentées dans le plan focal 40 du senseur de vision.

Tel qu'on l'a vu précédemment, du fait du déplacement du porteur, certains points caractéristiques Mi vont disparaître d'une image à l'autre. Ce phénomène est illustré par la présence de points caractéristiques en dehors du plan focal 40 dans la figure 2 (désignés sur cette figure par la référence 50). Cette représentation de points caractéristiques de l'image en dehors du plan focal 40 est virtuelle, puisque les points caractéristiques M'$_i$ en dehors du champ de vision de l'instrument d'observation n'apparaissent pas l'image.

On considère dans un premier temps des paires d'images de recalage du triplet, et on calcule à partir de ces paires, des mesures condensées dont une au moins est utilisée par le filtre de navigation du système de navigation.

On considère donc une paire d'images parmi le triplet d'images de recalage, par exemple les images I$_{n1}$, I$_{n2}$ et on considère des points caractéristiques Mi représentant des points caractéristiques M'$_i$ de l'environnement visibles sur les deux images de cette paire.

Dans un premier temps, on exprime, à partir des positions M$_i$$^{n1}$ et M$_i$$^{n2}$ des points Mi respectivement dans l'image de recalage I$_{n1}$ et dans l'image de recalage I$_{n2}$, la pose relative entre lesdites deux images de recalage I$_{n1}$ et I$_{n2}$.

On entend par « pose relative » la variation de la position et de l'attitude du senseur de vision (et donc du porteur, le senseur de vision étant supposé fixe par rapport au porteur ou avec une orientation connue à tout instant par rapport audit porteur) vis-à-vis de l'environnement 20 entre les deux instants n1 et n2 d'acquisition des images de recalage I$_{n1}$ et I$_{n2}$.

Dans la suite de la description, on se place, sauf indication contraire, dans le repère de référence (O,X,Y,Z) associé au senseur de vision, par exemple défini en considérant le point de référence O comme étant le centre du plan focal du senseur de vision, Z comme étant l'axe optique dudit senseur de vision, et (X,Y) comme étant le plan focal du senseur de vision.

La pose relative du senseur de vision est par exemple exprimée dans le repère de référence associé au senseur de vision tel qu'il est orienté à l'instant n2, désigné par R$_{n2}$. Différentes représentations sont possibles pour la pose relative, et on se place dans le cas où ladite pose relative est exprimée sous la forme ($\boldsymbol{P_{n1}P_{n2}}$, $\delta\theta_{n1n2}$), expression dans laquelle :

- P$_{ni}$ est la position de l'origine O du repère de référence R$_{ni}$, ni étant égal à n1 ou n2,
- $\boldsymbol{P_{n1}P_{n2}}$ est le vecteur constitué par P$_{n1}$ et P$_{n2}$, d'origine P$_{n1}$,
- $\delta\theta_{n1n2}$ est la matrice de passage qui transforme les coordonnées d'un vecteur dans le repère de référence R$_{n1}$ en les coordonnées de ce vecteur dans le repère de référence R$_{n2}$.

La figure 3 représente de façon très schématique les positions P$_{n1}$, P$_{n2}$ et P$_{n3}$ de l'origine O aux instants n1, n2 et n3, ainsi que l'environnement 20 vis-à-vis duquel le porteur se déplace et des points caractéristiques M'$_i$ de cet environnement.

Pour tout point caractéristique M'$_i$ de l'environnement, on a la relation vectorielle suivante :

$$\boldsymbol{P_{n1}P_{n2}} = \boldsymbol{P_{n1}M'_i} - \boldsymbol{P_{n2}M'_i} \qquad (1)$$

L'expression (1) peut s'exprimer de manière équivalente sous la forme normalisée suivante :

$$\frac{\boldsymbol{P_{n1}P_{n2}}}{\|\boldsymbol{P_{n1}P_{n2}}\|} = \frac{\|\boldsymbol{P_{n1}M'_i}\|}{\|\boldsymbol{P_{n1}P_{n2}}\|} \cdot \frac{\boldsymbol{P_{n1}M'_i}}{\|\boldsymbol{P_{n1}M'_i}\|} - \frac{\|\boldsymbol{P_{n2}M'_i}\|}{\|\boldsymbol{P_{n1}P_{n2}}\|} \cdot \frac{\boldsymbol{P_{n2}M'_i}}{\|\boldsymbol{P_{n2}M'_i}\|} \qquad (2)$$

expression dans laquelle on a désigné par $\|\boldsymbol{AB}\|$ la norme du vecteur $\boldsymbol{AB}$, c'est-à-dire la distance entre les points A et B.

En désignant par :

- $u_{n1n2}$ le vecteur unitaire (c'est-à-dire le vecteur de norme égale à 1) colinéaire au vecteur $\boldsymbol{P_{n1}P_{n2}}$,
- $u_{n1,i}$ le vecteur unitaire de la ligne de visée du senseur de vision vers le point caractéristique M'$_i$ de l'environnement 20 à l'instant n1,
- $u_{n2,i}$ le vecteur unitaire de la ligne de visée du senseur de vision vers le point caractéristique M'$_i$ de l'environnement 20 à l'instant n2,
- $\rho_{nj,i}$ la distance entre le point caractéristique M'$_i$ et la position P$_{nj}$ du porteur à l'instant d'acquisition nj (j égal à 1 ou 2),
- $z_{nj,i}$ le rapport entre la distance $\rho_{nj,i}$ et la distance $\|\boldsymbol{P_{n1}P_{n2}}\|$ parcourue par le point de référence O entre les instants n1 et n2, l'expression (2) peut s'exprimer sous la forme équivalente suivante :

$$\boldsymbol{u_{n1n2}} = z_{n1,i} \cdot \boldsymbol{u_{n1,i}} - z_{n2,i} \cdot \boldsymbol{u_{n2,i}} \qquad (3)$$

La relation vectorielle (3) peut être exprimée en termes de coordonnées dans le repère de référence R$_{n2}$ à

l'instant n2 sous la forme suivante :

$$\boldsymbol{u_{n1n2}}|R_{n2} = z_{n1,i} \cdot \delta\theta_{n1n2} \cdot \boldsymbol{u_{n1,i}}|R_{n1} - z_{n2,i} \cdot \boldsymbol{u_{n2,i}}|R_{n2} \qquad (4)$$

expression dans laquelle :

- $u_{n1n2}|R_{n2}$ et $\boldsymbol{u_{n2,i}}|R_{n2}$ désignent les coordonnées des vecteurs unitaires respectivement $\boldsymbol{u_{n1n2}}$ et $\boldsymbol{u_{n2,i}}$ dans le repère de référence $R_{n2}$,
- $\boldsymbol{u_{n1,i}}|R_{n1}$ désigne les coordonnées du vecteur unitaire $\boldsymbol{u_{n1,i}}$ dans le repère de référence $R_{n1}$.

On comprend que chaque point caractéristique $M'_i$ visible à la fois dans l'image de recalage $I_{n1}$ et l'image de recalage $I_{n2}$ peut conduire à ce type de relation vectorielle (4).

Dans l'expression (4), et pour chaque point caractéristique $M'_i$ de l'environnement 20, les termes $\boldsymbol{u_{n1n2}}|R_{n2}$, $\delta\theta_{n1n2}$, $z_{n1,i}$ et $z_{n2,i}$ représentent des termes non connus a priori, alors que les termes $\boldsymbol{u_{n1,i}}|R_{n1}$ et $\boldsymbol{u_{n2,i}}|R_{n2}$, qui sont les lignes de vue de ces points caractéristiques dans le repère du senseur de vision, peuvent s'exprimer directement à partir des positions connues $M_i^{n1}$ et $M_i^{n2}$ des points caractéristiques Mi associés aux points caractéristiques $M'_i$ de l'environnement respectivement dans les images $I_{n1}$ et $I_{n2}$.

Dans la suite de la description, on désigne par « pose relative normalisée » l'ensemble des paramètres $(\boldsymbol{u_{n1n2}}|R_{n2}, \delta\theta_{n1n2})$ (normalisée au sens où le vecteur unitaire $\boldsymbol{u_{n1n2}}|R_{n2}$ correspond seulement à la direction du vecteur $\boldsymbol{P_{n1}P_{n2}}$ sans indication sur la distance entre $P_{n1}$ et $P_{n2}$). Une pose relative normalisée comprend donc 5 paramètres scalaires indépendants : deux paramètres décrivant la direction du vecteur unitaire $\boldsymbol{u_{n1n2}}|R_{n2}$ (c'est-à-dire la direction de la translation du porteur entre les instants $t_{n1}$ et $t_{n2}$) et trois paramètres (angles d'Euler ou quaternion normalisé) donnant la matrice de passage $\delta\theta_{n1n2}$ (c'est la rotation du porteur entre les instants $t_{n1}$ et $t_{n2}$).

On comprend que l'on dispose, pour chaque point caractéristique $M'_i$ visible sur les images de recalage $I_{n1}$ et $I_{n2}$, d'une relation vectorielle (4) constituée par 3 relations scalaires. Ces 3 relations scalaires relient les positions $M_i^{n1}$ et $M_i^{n2}$, les 5 paramètres de pose relative normalisée à déterminer et les deux rapports de distances $z_{n1,i}$ et $z_{n2,i}$ à déterminer également.

Du fait des contraintes de normalisation $\|\boldsymbol{u_{n1n2}}|R_{n2}\| = 1$, les 3 relations scalaires précédentes conduisent en fait à 2 relations scalaires indépendantes.

D'autre part, les rapports de distance $z_{n1,i}$ et $z_{n2,i}$ ne sont pas indépendants mais liés entre eux par la relation :

$$z_{n2,i} = (z_{n1,i} \cdot \delta\theta_{n1n2} \cdot \boldsymbol{u_{n1,i}}|R_{n1} - \boldsymbol{u_{n1n2}}|R_{n2}) \cdot \boldsymbol{u_{n2,i}}|R_{n2} \qquad (5)$$

obtenue en appliquant le produit scalaire par le vecteur $\boldsymbol{u_{n2,i}}|R_{n2}$ aux deux membres de l'équation (4). On comprend par conséquent que, pour chaque point caractéristique $M'_i$, un seul des deux rapports de distance $z_{n1,i}$ et $z_{n2,i}$ constitue un paramètre indépendant.

Les 5 paramètres de pose relative normalisée sont les mêmes pour tous les points caractéristiques $M'_i$ visibles sur les deux images de recalage $I_{n1}$ et $I_{n2}$, alors que les rapports de distance $z_{n1,i}$ et $z_{n2,i}$, liés entre eux par la relation (5), dépendent du point caractéristique $M'_i$ considéré.

En considérant que l'on a $N_{12}$ points caractéristiques $M'_i$ visibles sur les deux images $I_{n1}$ et $I_{n2}$, on dispose alors de $2 \times N_{12}$ relations scalaires indépendantes (les $N_{12}$ relations vectorielles (4)) pour $(N_{12}+5)$ inconnues (5 paramètres de pose relative normalisée et $N_{12}$ rapports de distance indépendants). On comprend donc que la pose relative normalisée et les rapports de distance peuvent être estimés dès que l'on a $N_{12} = 5$ points caractéristiques $M'_i$ de l'environnement 20 visibles sur les deux images $I_{n1}$ et $I_{n2}$.

Il est avantageux de considérer un nombre de points caractéristiques $M'_i$ supérieur à 5, voire significativement supérieur à 5, pour améliorer la précision de l'estimation des mesures condensées, ce qui est toujours le cas dans la pratique car le nombre de points caractéristiques dans une image d'environnement typique de dimension 1000x1000 pixels peut facilement s'élever à plusieurs centaines. Lorsque les informations issues des images et fournies au filtre de navigation sont limitées aux seules mesures condensées, on peut avantageusement considérer un nombre de points caractéristiques plus important que dans l'art antérieur, sans augmenter la complexité des calculs effectués par ledit filtre de navigation. Dans l'art antérieur, le nombre d'états et de mesures augmentant le filtre de navigation est directement proportionnel au nombre N de zones caractéristiques conservées, alors que ce n'est plus le cas avec l'invention.

L'estimation de la pose relative normalisée entre les images $I_{n1}$ et $I_{n2}$ et des rapports de distance s'effectue par exemple par résolution du système constitué par l'ensemble des $2 \cdot N_{12}$ relations scalaires associées aux $N_{12}$ points caractéristiques $M'_i$ de l'environnement. Cette résolution peut s'effectuer selon tout procédé connu de l'homme de l'art, de préférence en mettant en oeuvre une technique d'estimation non linéaire aux moindres carrés. En effet, ce type de technique permet d'estimer également la matrice de covariance $C_{n1n2}$ des erreurs d'estimation de ces variables (pose relative normalisée et rapports de distance), tout en la minimisant.

La résolution du système constitué par l'ensemble des $2 \cdot N_{12}$ relations scalaires susmentionnées permet d'obtenir une mesure condensée à partir des informations contenues dans les images $I_{n1}$ et $I_{n2}$, représentative de la pose relative normalisée entre les images $I_{n1}$ et $I_{n2}$, ainsi que la matrice de covariance des erreurs d'estimation de cette pose relative normalisée, matrice que l'on extrait de la matrice de covariance $C_{n1n2}$.

On peut éventuellement restreindre cette mesure condensée à l'estimation de la direction de déplacement du porteur entre les images $I_{n1}$ et $I_{n2}$, cette mesure condensée étant alors l'estimation du vecteur $\mathbf{u_{n1n2}}|R_{n2}$, en faisant l'hypothèse que les variations d'attitude sont estimées et/ou mesurées sans faire appel aux images acquises par le senseur de vision (par exemple en utilisant uniquement le système de navigation). De même, il est possible de restreindre cette mesure condensée à l'estimation de la rotation du porteur entre les images $I_{n1}$ et $I_{n2}$, cette mesure condensée étant alors l'estimation de la matrice de passage $\delta\theta_{n1n2}$.

Au cours de l'étape 14 de calcul, on effectue de préférence le même type de traitement pour la paire d'images de recalage $I_{n2}$ et $I_{n3}$ que ceux effectués pour la paire d'images de recalage $I_{n1}$ et $I_{n2}$. Ce traitement s'effectue à partir des équations suivantes, établies pour chacun de $N_{23}$ points caractéristiques $M'_i$ communs aux deux images de recalage $I_{n2}$ et $I_{n3}$ :

$$\mathbf{u_{n2n3}}|R_{n3} = w_{n2,i} \cdot \delta\theta_{n2n3} \cdot \mathbf{u_{n2,i}}|R_{n2} - w_{n3,i} \cdot \mathbf{u_{n3,i}}|R_{n3} \qquad (6)$$

expression dans laquelle :

- $u_{n2n3}|R_{n3}$ et $\mathbf{u_{n3,i}}|R_{n3}$ désignent les coordonnées des vecteurs unitaires respectivement $\mathbf{u_{n2n3}}$ (colinéaire au vecteur $\mathbf{P_{n2}P_{n3}}$) et $\mathbf{u_{n3,i}}$ (colinéaire au vecteur $\mathbf{P_{n3}M'_i}$) dans le repère de référence $R_{n3}$,
- $\mathbf{u_{n2,i}}|R_{n2}$ désigne les coordonnées du vecteur unitaire $\mathbf{u_{n2,i}}$ (colinéaire au vecteur $\mathbf{P_{n2}M'_i}$) dans le repère de référence $R_{n2}$,
- $\rho_{nj,i}$ la distance entre le point caractéristique $M'_i$ et la position $P_{nj}$ du porteur à l'instant d'acquisition nj (j égal à 2 ou 3),
- $w_{nj,i}$ le rapport entre la distance $\rho_{nj,i}$ et la distance $\|\mathbf{P_{n2}P_{n3}}\|$ parcourue par le point de référence O entre les instants n2 et n3,
- $\delta\theta_{n2n3}$ est la matrice de passage qui transforme les coordonnées d'un vecteur dans le repère de référence $R_{n2}$ en les coordonnées de ce vecteur dans le repère de référence $R_{n3}$.

Comme pour la paire d'images de recalage $(I_{n1}, I_{n2})$, on estime, en fonction des positions $M_i^{n2}$ et $M_i^{n3}$ des points Mi respectivement dans les images $I_{n2}$ et $I_{n3}$, les 5 paramètres de pose relative normalisée entre les instants n2 et n3, ainsi que les deux rapports de distances $w_{n2,i}$ et $w_{n3,i}$.

Cette estimation de la pose relative normalisée et des rapports de distance entre les instants n2 et n3, s'effectue suivant tout procédé connu de l'homme de l'art, de préférence en mettant en oeuvre une technique d'estimation non linéaire aux moindres carrés à partir des équations (6). De préférence, on estime également la matrice de covariance $C_{n2n3}$ des erreurs d'estimation de ces variables.

Cette estimation permet d'obtenir une mesure condensée à partir des informations contenues dans les images $I_{n2}$ et $I_{n3}$, représentative de la pose relative normalisée entre les images $I_{n2}$ et $I_{n3}$, ainsi que la matrice de covariance des erreurs d'estimation de cette pose relative normalisée, matrice que l'on extrait de la matrice de covariance $C_{n2n3}$.

Il est à noter que rien n'exclut, suivant certains exemples de mise en oeuvre, de restreindre cette mesure condensée à l'estimation de la direction de déplacement du porteur entre les images $I_{n2}$ et $I_{n3}$, cette mesure condensée étant alors l'estimation du vecteur $\mathbf{u_{n2n3}}|R_{n3}$. De même, il est possible de restreindre cette mesure condensée à l'estimation de la rotation du porteur entre les images $I_{n2}$ et $I_{n3}$, cette mesure condensée étant alors l'estimation de la matrice de passage $\delta\theta_{n2n3}$.

On peut noter qu'outre les mesures condensées obtenues par estimation des poses relatives normalisées entre les paires d'image $(I_{n1}, I_{n2})$ et $(I_{n2}, I_{n3})$ du triplet d'images considéré, on pourrait former également des mesures condensées à partir de l'estimation de la pose relative normalisée entre les paires d'image $(I_{n1}, I_{n3})$. Cependant, la mesure condensée ainsi formée n'apporte pas d'information supplémentaire par rapport aux précédentes.

Au cours de l'étape 14 de calcul, on détermine un ensemble de points caractéristiques $M'_i$ visibles sur les trois images de recalage $I_{n1}$, $I_{n2}$, $I_{n3}$ du triplet. On désigne par $N_{123}$ le nombre de points caractéristiques $M'_i$ considérés, visibles sur les trois images de recalage du triplet.

Pour ces points caractéristiques $M'_i$, la relation suivante est vérifiée, par définition des paramètres $\rho_{n2,i}$ :

$$\rho_{n2,i} = w_{n2,i} \cdot \|\mathbf{P_{n2}P_{n3}}\| = z_{n2,i} \cdot \|\mathbf{P_{n1}P_{n2}}\| \qquad (7)$$

L'estimation des rapports de distances $w_{n2,i}$ et $z_{n2,i}$ comme exposé précédemment permet donc de déterminer à partir de l'équation (7) un autre type de mesure condensée, associée au triplet d'images $(I_{n1},I_{n2},I_{n3})$, représentative du rapport des distances parcourues $\delta = \|\boldsymbol{P_{n2}P_{n3}}\| / \|\boldsymbol{P_{n1}P_{n2}}\|$. Cette mesure condensée représentative du rapport des distances parcourues est par exemple une estimation de la valeur du rapport $\delta$, ou une estimation de la valeur d'une fonction de ce rapport, comme par exemple arctan($\delta$).

Il est à noter que cette mesure condensée, représentative du rapport des distances parcourues, peut être calculée en même temps que les autres mesures condensées précédemment décrites, en mettant en oeuvre une technique d'estimation non linéaire aux moindres carrés de ces mesures à partir des équations (4), (6), (7), de sorte que l'on puisse estimer simultanément la matrice de covariance des erreurs d'estimation associées à l'ensemble des mesures condensées qui seront utilisées par le filtre de navigation.

On comprend donc que, au cours de l'étape 14 de calcul, différentes mesures condensées peuvent être calculées, notamment une mesure représentative du rapport des distances parcourues, des mesures représentatives des poses relatives normalisées (éventuellement restreintes à des mesures condensées représentatives de la direction de déplacement du porteur). La quantité d'informations issues des images à traiter par le filtre de navigation est avantageusement limitée aux mesures condensées, et est par conséquent très réduite par rapport à l'art antérieur. En effet, la mesure condensée représentative du rapport des distances parcourues consiste essentiellement en un paramètre scalaire, et chaque mesure condensée représentative d'une pose relative normalisée consiste essentiellement en 5 paramètres scalaires, soit au total 11 paramètres scalaires représentatifs des 11 degrés de liberté du problème.

Etape 16 d'estimation du mouvement du porteur

Au cours de l'étape 16 d'estimation, le mouvement du porteur est estimé au moyen du filtre de navigation qui prend en entrée des mesures de navigation réalisées par le ou les senseurs de navigation de navigation et au moins une mesure condensée. En d'autres termes, le filtre de navigation effectue une fusion entre, d'une part, des mesures de navigation et, d'autre part, au moins une mesure condensée déterminée à partir d'un triplet d'images acquises par le senseur de vision.

L'estimation du mouvement du porteur s'effectue de préférence au moins en fonction de la mesure condensée représentative du rapport des distances parcourues correspondant au triplet d'images $(I_{n1}, I_{n2}, I_{n3})$. L'utilisation à la fois de la mesure condensée représentative du rapport des distances parcourues et des mesures condensées représentatives des poses relatives normalisées correspond à un mode préféré de mise en oeuvre du procédé 10 d'estimation.

L'estimation du mouvement du porteur met en oeuvre un filtre de navigation pour lequel de nombreuses implémentations du filtre de navigation sont possibles, comme par exemple un filtre de Kalman, un filtre de Kalman étendu, un filtre d'information, un filtre particulaire, un filtre bayésien, etc. De tels filtres de navigation sont considérés comme connus de l'homme de l'art et on pourra se référer notamment aux références de publications scientifiques citées précédemment.

De façon très générale, ces filtres propagent au cours du temps une estimation de l'état du porteur ainsi que la matrice de covariance de l'erreur d'estimation de cet état à partir d'un modèle d'évolution temporelle de l'état, et ils recalent cette estimation et la matrice de covariance associée en fonction des mesures et de la covariance des erreurs de mesures qui lui sont fournies, dans l'hypothèse où ces mesures dépendent de l'état du porteur.

Le vecteur d'états du filtre de navigation comporte notamment l'état du porteur à l'instant n (c'est-à-dire le mouvement que l'on cherche à estimer), que l'on désigne par $X_n$. L'état $X_n$ comprend de préférence au moins 6 paramètres : 3 paramètres représentatifs de la position d'un repère de référence lié au porteur dans un repère de référence externe au porteur, pouvant être tout repère lié de façon déterministe à l'environnement, et 3 paramètres représentatifs de l'attitude dudit repère de référence lié au porteur dans ledit repère de référence externe au porteur.

De préférence, le vecteur d'états du filtre de navigation est augmenté, par rapport à l'art antérieur, pour inclure l'état du porteur aux instants n1, n2 et n3, désigné respectivement par $X_{n1}$, $X_{n2}$ et $X_{n3}$. Par exemple, les états $X_{n1}$, $X_{n2}$, $X_{n3}$ contiennent les six paramètres de position et d'attitude du repère de référence du porteur respectivement aux instants n1, n2, n3.

Selon l'invention, les mesures fournies au filtre de navigation pour recaler (ou mettre à jour) les estimations des états du porteur comprennent les mesures de navigation réalisées par le ou les senseurs de navigation et au moins une mesure condensée. Dans un mode préféré de mise en oeuvre, les mesures condensées fournies au filtre de navigation comprennent, à partir de l'instant n2, l'estimation de la pose relative normalisée (ou l'estimation de la direction de déplacement) entre les instants n1 et n2, et à partir de l'instant n3, d'une part l'estimation de la pose relative normalisée (ou l'estimation de la direction de déplacement) entre les instants n2 et n3, et d'autre part la mesure du rapport de distances parcourues respectivement entre les instants n1 et n2, et entre les instants n2 et n3.

On note que, par définition, les mesures de pose relative normalisée et du rapport des distances parcourues s'expriment simplement et de façon analytique en fonction des paramètres de position et d'attitude inclus dans les états $X_{n1}$, $X_{n2}$, $X_{n3}$ du vecteur d'états augmenté. Cette relation entre mesures condensées et états $X_{n1}$, $X_{n2}$, $X_{n3}$ est un modèle

de mesures utilisé de manière classique par le filtre de navigation augmenté (filtre de Kalman par exemple).

De préférence, lorsque l'on a déterminé préalablement les covariances des erreurs sur l'estimation de tout ou partie des mesures condensées (estimation du rapport de distances parcourues, estimations de pose relative normalisée ou estimations de direction de déplacement), celles-ci sont également fournies au filtre de navigation, en complément des mesures de navigation et des mesures condensées, pour être traitées de manière classique par le filtre de navigation (filtre de Kalman par exemple).

L'hybridation des mesures de navigation avec la mesure condensée permet, dans certains cas pratiques, d'améliorer sensiblement la précision de l'estimation du mouvement du porteur.

Par exemple, on se place dans le cas où le déplacement du porteur est rectiligne, avec une accélération $a_1$ sensiblement constante entre les instants n1 et n2, et avec une accélération $a_2$ sensiblement constante entre les instants n2 et n3 (l'accélération $a_2$ pouvant être égale à l'accélération $a_1$, mais les accélérations $a_1$ et $a_2$ n'étant pas toutes deux nulles). Ce cas est représentatif, bien que très simplifié, d'un scénario d'atterrissage du porteur sur un relief, scénario dans lequel les accélérations $a_1$ et $a_2$ sont négatives.

Des calculs cinématiques simples permettent d'établir les relations suivantes :

$$\|\boldsymbol{P_{n1}P_{n2}}\| = v_1 \cdot \Delta t_{12} + \tfrac{1}{2} \cdot a_1 \cdot (\Delta t_{12})^2 \qquad (8a)$$

$$\|\boldsymbol{P_{n2}P_{n3}}\| = (v_1 + a1 \cdot \Delta t_{12}) \cdot \Delta t_{23} + \tfrac{1}{2} \cdot a_2 \cdot (\Delta t_{23})^2 \qquad (8b)$$

expressions dans lesquelles $\Delta t_{12} = t_{n2} - t_{n1}$ et $\Delta t_{23} = t_{n3} - t_{n2}$, et $v_1$ est la vitesse du porteur par rapport à l'environnement à l'instant n1.

On déduit des relations (8a) et (8b) que :

$$v_1 = \frac{1/2 \cdot \delta \cdot a_1 \cdot (\Delta t_{12})^2 - a_1 \cdot \Delta t_{12} \cdot \Delta t_{23} - 1/2 \cdot a_2 \cdot (\Delta t_{23})^2}{\Delta t_{23} - \delta \cdot \Delta t_{12}} \qquad (9)$$

Le fait que le mouvement est accéléré signifie que le rapport $\delta$ des distances parcourues entre respectivement les instants n2 et n3, et les instants n1 et n2, est différent du rapport $\Delta t_{23} / \Delta t_{12}$ (le porteur ne va pas à vitesse constante, en moyenne entre les instants n1 et n3). Alors, le dénominateur de l'expression (9) n'est pas nul et on voit que la connaissance de la mesure condensée représentative du rapport $\delta$ des distances parcourues, couplée à une connaissance de l'accélération, permet d'estimer la vitesse $v_1$ du porteur.

L'avantage offert par la prise en compte des images dans le système de navigation, est que la connaissance de la vitesse $v_1$ n'est pas obtenue en intégrant l'accélération dont la mesure est empreinte d'erreurs, ce qui évite les dérives et permet donc d'améliorer la précision de l'estimation de l'état $X_n$ du porteur, et donc de son mouvement par rapport à l'environnement 20.

La prise en compte des mesures condensées s'avère également avantageuse dans le cas où le système de navigation fournit une aide intermittente (par exemple un système de positionnement par satellites GPS ou autre dans un canyon urbain, ou un système odométrique dans un environnement glissant).

A titre d'exemple, on suppose que le système de navigation est opérationnel entre les instants n1 et n2, mais qu'il n'est plus opérationnel entre les instants n2 et n3. Le système de navigation fournit une estimation assez précise du déplacement $\boldsymbol{P_{n1}P_{n2}}$, et donc de la distance $\|\boldsymbol{P_{n1}P_{n2}}\|$ parcourue par le porteur entre les instants n1 et n2, mais il ne fournit plus d'estimation fiable entre les instants n2 et n3. La mesure condensée représentative du rapport des distances parcourues à l'instant n3 permet d'estimer, en fonction de l'estimation de la distance parcourue $\|\boldsymbol{P_{n1}P_{n2}}\|$ fournie par le système de navigation, la distance parcourue $\|\boldsymbol{P_{n2}P_{n3}}\|$ entre les instants n2 et n3. L'estimation de la distance parcourue $\|\boldsymbol{P_{n2}P_{n3}}\|$, combinée à la mesure condensée représentative de la pose relative normalisée entre les instants n2 et n3, permet d'estimer le déplacement $\boldsymbol{P_{n2}P_{n3}}$. On comprend donc que le système de vision peut se substituer au système de navigation déficient entre les instants n2 et n3. De proche en proche, on peut propager ainsi l'estimation des déplacements effectués, et donc de l'état du porteur en position et en attitude, jusqu'à ce que le système de navigation soit à nouveau opérationnel.

Le procédé 10 s'applique de façon séquentielle aux instants ultérieurs à n3 suivant les mêmes principes. Par exemple, à un instant n4 ultérieur à n3, on applique le procédé aux images de recalage $I_{n2}$, $I_{n3}$, $I_{n4}$, en remplaçant dans le vecteur d'états du filtre de navigation l'état $X_{n1}$ par l'état $X_{n4}$ du porteur à l'instant n4. On note qu'entre les instants n3 et n4, les informations visuelles traitées par le filtre de navigation augmenté sont avantageusement limitées aux mesures condensées déterminées à partir des images de recalage $I_{n1}$, $I_{n2}$ et $I_{n3}$.

Mode préféré de mise en oeuvre du procédé 10 d'estimation

Dans la suite de la description, on décrit un mode préféré de mise en oeuvre du procédé 10 d'estimation, dans lequel l'étape 14 de calcul de l'au moins une mesure condensée met en oeuvre une estimation au sens des moindres carrés, et dans lequel l'étape 16 d'estimation met en oeuvre un filtre de navigation de type filtre de Kalman. Le problème étant fortement non linéaire, les équations données ci-après sont des « équations aux erreurs ». Le filtre de navigation est donc avantageusement un filtre de Kalman non linéaire du type étendu (« Extended Kalman Filter » dans la littérature anglo-saxonne) ou inodore (« Unscented Kalman Filter » dans la littérature anglo-saxonne).

Tel qu'indiqué précédemment, l'au moins une mesure condensée est calculée en fonction à la fois des points caractéristiques et d'une estimation a priori du mouvement fournie par le filtre de navigation. Dans la suite de la description, on désigne par $Z_k$ un vecteur de mesure condensée calculé à un instant k au cours de l'étape 14 de calcul. Le vecteur $Z_k$ de mesure condensée comporte au moins une mesure condensée, sélectionnée(s) parmi les mesures condensées possibles suivantes :

- mesure condensée correspondant au rapport des distances parcourues par le porteur entre les instants d'acquisition de deux paires d'images d'un triplet d'images,
- mesure condensée correspondant à la direction de déplacement du porteur entre les instants d'acquisition d'une paire d'images,
- mesure condensée correspondant à la rotation du porteur entre les instants d'acquisition d'une paire d'images.

De manière plus générale, on a vu que l'ensemble des mesures condensées ci-dessus était représentatif des 11 degrés de liberté du problème, et le vecteur $Z_k$ de mesure condensée doit comporter au moins une mesure condensée, représentative(s) de tout ou partie de ces 11 degrés de liberté.

L'estimation a priori fournie par le filtre de navigation à l'instant k est désignée ci-après par $\hat{S}$. Tel qu'indiqué précédemment, l'estimation a priori du mouvement du porteur peut être totale ou partielle. Il est en effet possible d'estimer l'ensemble du mouvement du porteur et de le fournir en entrée de l'étape 14 de calcul de l'au moins une mesure condensée, ou de n'estimer au contraire que certains paramètres dudit mouvement. Dans la suite de la description, on se place de manière non limitative dans le cas l'estimation a priori $\hat{S}$ correspond à une estimation de la rotation du porteur, ladite rotation du porteur étant désignée ci-après par $S$.

De préférence, le filtre de navigation fournit également, pour le calcul du vecteur $Z_k$ de mesure condensée, la matrice de covariance $\boldsymbol{P_{SS}}$ de l'erreur commise sur l'estimation a priori $\hat{S}$.

Dans la suite de la description, on considère que les informations obtenues à partir des points caractéristiques, désignées ci-après par $Y$, sont liées au vecteur $Z_k$ de mesure condensée par l'expression suivante :

$$Y = \boldsymbol{H}Z_k + V \qquad (10)$$

expression dans laquelle le vecteur $V$ représente un bruit de mesure.

On considère également que la rotation $S$ du porteur est liée au vecteur $Z_k$ de mesure condensée par l'expression suivante :

$$S = \boldsymbol{S_X}Z_k \qquad (11)$$

L'estimation $\hat{Z}_k$ du vecteur de mesure condensée, au sens des moindres carrés, calculée au cours de l'étape 14 de calcul, est alors donnée par l'expression suivante :

$$\hat{Z}_k = \left(\boldsymbol{H}^T\boldsymbol{\Lambda_V}\boldsymbol{H} + \boldsymbol{S_X^T}\boldsymbol{P_{SS}^{-1}}\boldsymbol{S_X}\right)^{-1}\left(\boldsymbol{H}^T\boldsymbol{\Lambda_V}Y + \boldsymbol{S_X^T}\boldsymbol{P_{SS}^{-1}}\hat{S}\right) \qquad (12)$$

expression dans laquelle $\boldsymbol{\Lambda_V}$ est la matrice d'information associée au vecteur $Y$.

De préférence, la matrice de covariance $\boldsymbol{P_{ZZ}}$ de l'erreur commise sur l'estimation $\hat{Z}_k$ du vecteur de mesure condensée est également estimée, par exemple selon l'expression suivante :

$$\boldsymbol{P_{ZZ}} = \left(\boldsymbol{H}^T\boldsymbol{\Lambda_V}\boldsymbol{H} + \boldsymbol{S_X^T}\boldsymbol{P_{SS}^{-1}}\boldsymbol{S_X}\right)^{-1} \qquad (13)$$

Tel qu'indiqué ci-dessus, on se place de manière non limitative dans le cas où le filtre de navigation est un filtre de Kalman. De manière conventionnelle, l'état du filtre de navigation est représenté, à un instant k, par un vecteur $X_k$ d'états, dont l'estimation, désignée ci-après par $\hat{X}_k$, correspond à l'estimation du mouvement du porteur à l'instant k.

Un filtre de Kalman comporte de manière conventionnelle deux étapes principales : une étape de mise à jour et une étape de prédiction.

L'étape de mise à jour du filtre de navigation est principalement régie par les expressions suivantes :

$$K_k = P_{k|k-1}H_k\big(R_k + H_k P_{k|k-1}H_k^T\big)^{-1} \qquad (14a)$$

$$\hat{X}_k = \hat{X}_{k|k-1} - K_k\big(H_k\hat{X}_{k|k-1} - \hat{Z}_k\big) \qquad (14b)$$

$$P_k = (I - K_k H_k)P_{k|k-1} \qquad (14c)$$

expressions dans lesquelles :

- $H_k$ est la matrice qui relie le vecteur $X_k$ d'états du filtre de navigation au vecteur $Z_k$ de mesure condensée,
- $P_k$ est la matrice de covariance de l'erreur commise sur l'estimation $\hat{X}_k$ du vecteur d'états du filtre de navigation,
- $R_k$ est la matrice de covariance du bruit de mesure affectant l'estimation $\hat{Z}_k$ du vecteur de mesure condensée,
- $\hat{X}_{k|k-1}$ est la prédiction du vecteur $X_k$ d'états à l'instant k à partir de l'estimation $\hat{X}_{k-1}$ du vecteur d'états à l'instant (k-1),
- $I$ est la matrice identité,
- $P_{k|k-1}$ est la prédiction de la matrice de covariance $P_k$ à l'instant k à partir de la matrice de covariance $P_{k-1}$ à l'instant (k-1).

L'étape de prédiction du filtre de navigation est principalement régie par les expressions suivantes :

$$\hat{X}_{k|k-1} = F_k\hat{X}_{k-1} + U_{k-1} \qquad (15a)$$

$$P_{k|k-1} = F_k P_{k-1} F_k^T + Q_k \qquad (15b)$$

expressions dans lesquelles :

- $F_k$ est la matrice qui relie le vecteur $X_{k-1}$ d'états du filtre de navigation au vecteur $X_k$ d'états dudit filtre de navigation,
- $U_{k-1}$ est un vecteur de mesures de navigation à l'instant (k-1),
- $Q_k$ est la matrice de covariance du bruit du processus.

En considérant que la rotation $S$ du porteur est liée au vecteur $X_k$ d'états par l'expression suivante :

$$S = H_S X_k \qquad (16)$$

alors l'estimation a priori $\hat{S}$ et sa matrice de covariance $P_{SS}$ sont par exemple calculées suivant les expressions suivantes :

$$\hat{S} = H_S\hat{X}_{k|k-1} \qquad (17a)$$

$$P_{SS} = H_S P_{k|k-1} H_S^T \qquad (17b)$$

Suivant un exemple particulièrement simple de mise en oeuvre, la matrice $R_k$ de covariance du bruit de mesure affectant l'estimation $\hat{Z}_k$ du vecteur de mesure condensée est considérée comme étant égale à la matrice de covariance $P_{ZZ}$ de l'erreur commise sur l'estimation du vecteur de mesure condensée. Toutefois, un inconvénient d'une telle approche réside dans le fait que l'erreur commise par le filtre de navigation, sur l'estimation a priori du mouvement du porteur, est réinjectée dans ledit filtre de navigation par le biais de l'estimation $\hat{Z}_k$ du vecteur de mesure condensée. Une telle réinjection de l'erreur commise peut s'avérer problématique, et dégrader dans certains cas la précision de l'estimation finale du mouvement fournie par le filtre de navigation.

Dans des modes préférés de mise en oeuvre, le procédé 10 d'estimation comporte avantageusement une estimation de la relation entre l'erreur commise sur l'estimation a priori $\hat{S}$ dudit mouvement et l'erreur commise sur l'estimation $\hat{Z}_k$ du vecteur de mesure condensée. En outre, le filtre de navigation estime alors le mouvement du porteur en fonction en outre de l'erreur commise sur l'estimation $\hat{Z}_k$ du vecteur de mesure condensée (matrice de covariance $P_{ZZ}$) et en fonction de la relation entre l'erreur commise sur l'estimation a priori $\hat{S}$ dudit mouvement et l'erreur commise sur l'estimation $\hat{Z}_k$ du vecteur de mesure condensée.

Par exemple, la relation entre l'erreur commise sur l'estimation a priori $\hat{S}$ dudit mouvement et l'erreur commise sur l'estimation $\hat{Z}_k$ du vecteur de mesure condensée, ci-après désignée par matrice d'influence **B,** est estimée selon l'expression suivante :

$$B = \left(H^T \Lambda_V H + S_X^T P_{SS}^{-1} S_X\right)^{-1} S_X^T P_{SS}^{-1} \qquad (18)$$

De préférence, l'estimation du mouvement en tenant compte de la matrice d'influence **B** est par exemple réalisée en remplaçant, pour l'étape de mise à jour du filtre de navigation, les matrices $R_k$ et $H_k$ par des matrices respectivement $\tilde{R}_k$ et $\tilde{H}_k$, calculées selon les expressions suivantes :

$$\tilde{R}_k = P_{ZZ} - B P_{SS} B^T \qquad (19a)$$

$$\tilde{H}_k = H_k - B \qquad (19b)$$

de sorte que les expressions qui régissent l'étape de mise à jour du filtre de navigation deviennent :

$$K_k = P_{k|k-1} \tilde{H}_k \left(\tilde{R}_k + \tilde{H}_k P_{k|k-1} \tilde{H}_k^T\right)^{-1} \qquad (20a)$$

$$\hat{X}_k = \hat{X}_{k|k-1} - K_k\left(\tilde{H}_k \hat{X}_{k|k-1} - \hat{Z}_k\right) \qquad (20b)$$

$$P_k = \left(I - K_k \tilde{H}_k\right) P_{k|k-1} \qquad (20c)$$

De la sorte, la précision de l'estimation est améliorée par une prise en compte, au niveau des équations du filtre de navigation, du fait que l'estimation $\hat{Z}_k$ du vecteur de mesure condensée est calculée en fonction d'une estimation a priori du mouvement fournie par ledit filtre de navigation.

Généralisation du procédé 10 à des éléments caractéristiques

Les exemples de mise en oeuvre du procédé 10 décrits précédemment sont basés sur l'utilisation de points caractéristiques apparaissant dans les images. Les traitements associés sont simples et efficaces en temps de calcul. Cependant, d'autres techniques de traitement d'images peuvent être utilisées pour calculer les mesures condensées.

De manière plus générale, le procédé 10 d'estimation utilise des éléments caractéristiques des images, considérés comme représentant des éléments caractéristiques de l'environnement. En particulier, le procédé 10 utilise, suivant d'autres exemples, des objets caractéristiques ou une ou des surfaces caractéristiques, qui sont discutés ci-après.

a) Objets caractéristiques

Des objets caractéristiques, liés à l'environnement, sont par exemple des segments de droite dans le cas le plus simple (cas très fréquent lorsque le porteur se déplace vis-à-vis d'un environnement structuré, par exemple comportant des bâtiments). Le suivi de tels objets caractéristiques d'une image à l'autre s'effectue par exemple tel que décrit dans la publication scientifique des auteurs Peer Neubert, Peter Protzel, Teresa Vidal-Calleja and Simon Lacroix, « A fast Visual Line Segment Tracker » in IEEE Int. Conf. on Emerging Technologies and Factory Automation, Hamburg (Germany), Sept. 2008

Ces objets peuvent être reconnus, appariés et pistés d'une image à l'autre. Les différences en position et orientation de ces objets d'une image à l'autre renseignent sur la variation en position et attitude du porteur par rapport à l'environnement, puisque des relations géométriques relient les uns aux autres. Il suffit en général d'un nombre réduit de tels objets pour estimer sans ambiguïté les poses relatives normalisées d'une image à l'autre, et les rapports de distance parcourue dans un triplet d'images, comme décrit précédemment dans le cas des points caractéristiques.

Par exemple, un segment de droite dans l'image peut être décrit par deux paramètres : la distance au centre du plan focal et l'angle d'orientation dans le plan focal. Ce segment de droite dans l'image représente un segment caractéristique de l'environnement qui peut être lui-même paramétré en trois dimensions. La variation du segment de droite d'une image à l'autre fournit deux paramètres qui sont les variations de cette distance et de cet angle. La variation de ces paramètres dépend géométriquement de la position et de l'orientation du segment de droite de l'environnement dans le repère de référence lié au porteur, et du déplacement du porteur d'une image à l'autre. Ces relations géométriques peuvent être utilisées pour estimer les mesures condensées, de la même façon que les positions des points caractéristiques $M_i$ dans l'image ont été utilisées pour estimer ces mesures condensées. On peut avantageusement utiliser une combinaison de points caractéristiques et d'objets, par exemple en considérant les extrémités d'un objet caractéristique de type segment de droite.

b) Surfaces caractéristiques

Dans une autre variante du procédé, en particulier lorsque le porteur se déplace dans des environnements faiblement structurés (par exemple survol de terrains), on peut supposer que les pixels rapprochés dans l'image représentent des points rapprochés dans l'environnement et que l'environnement, ou une partie de cet environnement (que l'on appellera « terrain » dans ce cas) peut être décrit par une surface continue, dite surface caractéristique de l'environnement. L'objectif peut être d'identifier dans sa globalité la partie de la surface du terrain visible dans deux ou trois images (sans l'intermédiaire de points ou d'objets caractéristiques) en même temps qu'on estime les mesures condensées. Par exemple, on décrit la surface du terrain sous la forme de maillages 3D paramétrés (typiquement quelques centaines de paramètres). En utilisant un premier couple d'images $(I_{n1}, I_{n2})$ (on suppose qu'il y a eu un déplacement en position entre les deux images), on estime à la fois les paramètres de la surface et la mesure condensée de pose relative normalisée en utilisant le plus grand nombre de pixels possibles (ceux représentant les points de l'environnement visibles sur les deux images), sans distinction de points ou d'objets caractéristiques. Ceci peut se faire par exemple en utilisant des techniques de traitement stéréoscopiques comme par exemple celles données dans l'article de S. M. Seitz, B. Curless, J. Diebel, D. Scharstein, et R. Szeliski, « A Comparison and Evaluation of Multi-View Stéréo Reconstruction Algorithms » in Proc. CVPR 2006. Le relief est ainsi estimé « par effet stéréoscopique » à partir du couple d'images $(I_{n1}, I_{n2})$. Cette estimation s'effectue à un facteur d'échelle près, donné par la distance parcourue entre n1 et n2 (équivalent à la base d'une paire d'images stéréoscopiques). Imaginons que cette distance soit connue, ce qui lève l'ambiguïté sur la surface du terrain. Cette surface étant maintenant estimée, on peut prédire l'évolution de l'image de cette surface à un instant n3 ultérieur à n2, en fonction de la pose absolue entre les instants n2 et n3 (on peut éventuellement utiliser un modèle d'illumination et de réflectance du terrain). En corrélant l'image prédite en n3 avec l'image réelle $I_{n3}$, on pourra donc estimer non seulement la pose relative normalisée entre les instants n2 et n3 comme précédemment, mais également la distance parcourue entre n2 et n3, comme étant la distance qui maximise la corrélation entre l'image prédite pour cette distance et l'image réelle. Si on n'utilise que les informations contenues dans l'image, la distance parcourue entre n1 et n2 n'est pas observable, ni la distance parcourue entre n2 et n3, mais le rapport des distances parcourues entre respectivement (n1, n2) et (n2, n3) le sera.

Exemples non limitatifs d'application de l'invention

L'utilisation de l'invention est avantageuse dans de nombreux cas, par exemple :

- porteurs subissant de fortes accélérations (atterrisseurs, missiles) : le porteur étant en accélération, les mesures condensées contiennent une information sur la vitesse et l'accélération par rapport à l'environnement ; l'accélération étant connue par la connaissance a priori de la commande ou via une mesure de l'accélération, on peut en déduire la vitesse relative ;
- porteurs au sol : si le mouvement entre les deux premières images $I_{n1}$ et $I_{n2}$ est connu en utilisant une odométrie externe ou une navigation par satellites (GPS, même limité à un nombre de satellites inférieur à 4) par exemple, les mesures condensées permettent de propager cette connaissance à l'image $I_{n3}$ ; les mesures condensées peuvent être utilisées en complément de l'odométrie ou en remplacement de celle-ci en cas de dérapage, ou bien en complément d'une navigation par satellites en cas d'indisponibilité temporaire (canyons urbains, etc.) ;
- rendez-vous de deux porteurs spatiaux : avant le démarrage des opérations de rendez-vous, les porteurs sont en général en attente et quasiment fixes l'un par rapport à l'autre ; il est important d'acquérir au moins deux images pendant cette phase, de sorte que l'acquisition d'une autre image peu de temps après la mise en accélération du porteur chasseur permette une observabilité de la distance relative entre les porteurs en utilisant les mesures condensées,

- localisation de porteurs a posteriori : les traitements proposés peuvent s'effectuer sur des données enregistrées en vol puis stockées et traitées au sol après le vol.

**Revendications**

1.   - Procédé (10) d'estimation du mouvement d'un porteur par rapport à un environnement (20) vis-à-vis duquel ledit porteur se déplace, le porteur embarquant au moins un senseur de navigation et au moins un senseur de vision produisant des images de l'environnement, ledit procédé comportant des étapes de :

   - (12) identification, dans des images acquises par le senseur de vision, d'éléments caractéristiques des images représentant des éléments caractéristiques de l'environnement,
   - (14) calcul d'au moins une mesure condensée en fonction d'éléments caractéristiques d'au moins deux images acquises à des instants différents, l'au moins une mesure condensée étant représentative de caractéristiques du mouvement du porteur au cours de l'acquisition desdites au moins deux images, l'au moins une mesure condensée étant représentative :

      o d'un rapport des distances parcourues par le porteur entre les instants d'acquisition de deux paires d'images d'un triplet d'images, en fonction d'éléments caractéristiques des images dudit triplet représentant des éléments caractéristiques de l'environnement visibles sur chacune des trois images dudit triplet, et/ou
      o d'une direction de déplacement du porteur et/ou d'une rotation du porteur entre les instants d'acquisition d'une paire d'images, en fonction d'éléments caractéristiques de cette paire d'images représentant des éléments caractéristiques de l'environnement visibles sur chacune des deux images de cette paire,

   - (16) estimation du mouvement du porteur par un filtre d'estimation, dit « filtre de navigation », en fonction de mesures de navigation réalisées par le senseur de navigation et en fonction de l'au moins une mesure condensée,

   **caractérisé en ce que** l'au moins une mesure condensée est calculée en fonction en outre d'une estimation a priori du mouvement du porteur fournie par le filtre de navigation.

2.   - Procédé (10) selon la revendication 1, comportant une estimation de l'erreur commise sur l'au moins une mesure condensée et une estimation de la relation entre l'erreur commise sur l'estimation a priori dudit mouvement et l'erreur commise sur l'au moins une mesure condensée, et dans lequel le filtre de navigation estime le mouvement du porteur en fonction en outre de l'estimation de l'erreur commise sur l'au moins une mesure condensée et en fonction de la relation entre l'erreur commise sur l'estimation a priori dudit mouvement et l'erreur commise sur l'au moins une mesure condensée.

3.   - Procédé (10) selon l'une des revendications précédentes, dans lequel l'au moins une mesure condensée est calculée en fonction en outre d'une estimation de l'erreur commise sur l'estimation a priori du mouvement.

4.   - Procédé (10) selon l'une des revendications précédentes, dans lequel le calcul de l'au moins une mesure condensée met en oeuvre une estimation au sens des moindres carrés.

5.   - Procédé (10) selon l'une des revendications précédentes, dans lequel le filtre de navigation est un filtre de Kalman.

6.   - Procédé (10) selon l'une des revendications précédentes, dans lequel l'estimation a priori du mouvement du porteur consiste en une estimation de la rotation du porteur ou en une estimation de la translation du porteur entre les instants d'acquisition des images.

7.   - Produit programme d'ordinateur **caractérisé en ce qu'**il comporte un ensemble d'instructions de code de programme qui, lorsqu'elles sont exécutées par un processeur, mettent en oeuvre un procédé d'estimation du mouvement d'un porteur selon l'une des revendications précédentes.

8.   - Dispositif de calcul pour système de navigation d'un porteur embarquant au moins un senseur de navigation et au moins un senseur de vision, **caractérisé en ce qu'**il comporte des moyens configurés pour estimer le mouvement du porteur conformément à l'une des revendications 1 à 6.

**Patentansprüche**

1. Verfahren (10) zur Schätzung der Bewegung eines Trägers in Bezug auf eine Umgebung (20), gegenüber welcher der Träger sich fortbewegt, wobei der Träger mindestens einen Navigationssensor und mindestens einen Bildsensor, der Bilder der Umgebung erzeugt, umfasst, wobei das Verfahren die Schritte aufweist:

   - (12) Identifizieren von charakteristischen Bildelementen, die charakteristische Elemente der Umgebung repräsentieren, in von dem Bildsensor erfassten Bildern,
   - (14) Berechnen mindestens eines komprimierten Messwerts als Funktion von charakteristischen Elementen mindestens zweier, an unterschiedlichen Zeitpunkten erfasster Bilder, wobei der mindestens eine komprimierte Messwert für Eigenschaften der Bewegung des Trägers im Verlauf der Erfassung der mindestens zwei Bilder repräsentativ ist, wobei der mindestens eine komprimierte Messwert repräsentativ ist für:

      o ein Verhältnis von Strecken, die von dem Träger zwischen den Erfassungszeitpunkten zweier Bilderpaare eines Bildertripletts zurückgelegt worden sind, als Funktion von charakteristischen Elementen der Bilder des Tripletts, die charakteristische Elemente der Umgebung repräsentieren, die auf jedem der drei Bilder des Tripletts zu sehen sind, und/oder
      o eine Fortbewegungsrichtung des Trägers und/oder eine Rotation des Trägers zwischen den Erfassungszeitpunkten eines Bilderpaars als Funktion von charakteristischen Elementen dieses Bilderpaars, die charakteristische Elemente der Umgebung repräsentieren, die auf jedem der zwei Bilder dieses Paars zu sehen sind,

   - (16) Schätzen der Bewegung des Trägers mithilfe eines Schätzfilters, "Navigationsfilter" genannt, als Funktion von Navigationsmesswerten, die von dem Navigationssensor gewonnen werden, und als Funktion des mindestens einen komprimierten Messwerts,

   **dadurch gekennzeichnet, dass** der mindestens eine komprimierte Messwert außerdem als Funktion einer von dem Navigationsfilter bereitgestellten a-priori-Schätzung der Bewegung des Trägers berechnet wird.

2. Verfahren (10) nach Anspruch 1, aufweisend eine Schätzung eines an dem mindestens einen komprimierten Messwert anhaftenden Fehlers und eine Schätzung des Verhältnisses zwischen dem an der a-priori-Schätzung der Bewegung anhaftenden Fehler und dem an dem mindestens einen komprimierten Messwert anhaftenden Fehler, und in welchem das Navigationsfilter die Bewegung des Trägers außerdem als Funktion der Schätzung des an dem mindestens einen komprimierten Messwert anhaftenden Fehlers und als Funktion des Verhältnisses zwischen dem an der a-priori-Schätzung der Bewegung anhaftenden Fehler und dem an dem mindestens einen komprimierten Messwert anhaftenden Fehler schätzt.

3. Verfahren (10) nach einem der vorstehenden Ansprüche, in welchem der mindestens eine komprimierte Messwert außerdem als Funktion einer Schätzung des an der a-priori-Schätzung der Bewegung anhaftenden Fehlers berechnet wird.

4. Verfahren (10) nach einem der vorstehenden Ansprüche, in welchem die Berechnung des mindestens einen komprimierten Messwerts eine Schätzung im Sinne kleinster Quadrate durchführt.

5. Verfahren (10) nach einem der vorstehenden Ansprüche, in welchem das Navigationsfilter ein Kalman-Filter ist.

6. Verfahren (10) nach einem der vorstehenden Ansprüche, in welchem die a-priori-Schätzung der Bewegung des Trägers in einer Schätzung der Rotation des Trägers oder in einer Schätzung der Translation des Trägers zwischen den Bilderfassungszeitpunkten besteht.

7. Computerprogrammprodukt, **dadurch gekennzeichnet, dass** es eine Reihe von Programmcode-Befehlen aufweist, die, wenn sie von einem Prozessor abgearbeitet werden, ein Verfahren zum Schätzen der Bewegung eines Trägers nach einem der vorstehenden Ansprüche durchführen.

8. Berechnungsvorrichtung für ein Navigationssystem eines Trägers, der mindestens einen Navigationssensor und

**EP 3 227 860 B1**

mindestens einen Bildsensor umfasst, **dadurch gekennzeichnet, dass** sie Einrichtungen aufweist, die konfiguriert sind, um die Bewegung des Trägers gemäß einem der Ansprüche 1 bis 6 zu schätzen.

**Claims**

1. A method (10) for estimating the motion of a carrier with respect to an environment (20) in relation to which said carrier is moving, the carrier incorporating at least one navigation sensor and at least one vision sensor producing images of the environment, said method including steps of:

   - (12) identifying, in images acquired by the vision sensor, characteristic elements of the images representing characteristic elements of the environment,
   - (14) calculating at least one condensed measurement based on characteristic elements of at least two images acquired at different times, the at least one condensed measurement being representative of features of the motion of the carrier during the acquisition of said at least two images, the at least one condensed measurement being representative:

     o of a ratio of the distances travelled by the carrier between the times of acquisition of two pairs of images of a triplet of images, based on characteristic elements of the images of said triplet representing characteristic elements of the environment visible on each of the three images of said triplet, and/or
     o of a direction of displacement of the carrier and/or a rotation of the carrier between the times of acquisition of a pair of images, based on characteristic elements of this pair of images representing characteristic elements of the environment visible on each of the two images of this pair,

     - (16) estimating the motion of the carrier by an estimate filter, called a "navigation filter", based on navigation measurements carried out by the navigation sensor and based on the at least one condensed measurement, **characterised in that** the at least one condensed measurement is calculated based also on an a priori estimate of the motion of the carrier provided by the navigation filter.

2. The method (10) according to claim 1, including an estimate of the error committed on the at least one condensed measurement and an estimate of the relationship between the error committed on the a priori estimate of said motion and the error committed on the at least one condensed measurement, and wherein the navigation filter estimates the motion of the carrier based also on the estimate of the error committed on the at least one condensed measurement and based on the relationship between the error committed on the a priori estimate of said motion and the error committed on the at least one condensed measurement.

3. The method (10) according to one of the preceding claims, wherein the at least one condensed measurement is calculated based also on an estimate of the error committed on the a priori estimate of the motion.

4. The method (10) according to one of the preceding claims, wherein the calculation of the at least one condensed measurement implements a least squares estimate.

5. The method (10) according to one of the preceding claims, wherein the navigation filter is a Kalman filter.

6. The method (10) according to one of the preceding claims, wherein the a priori estimate of the motion of the carrier consists of an estimate of the rotation of the carrier or an estimate of the translation of the carrier between the times of acquisition of the images.

7. A computer program product **characterised in that** it includes a set of program code instructions which, when executed by a processor, implement a method for estimating the motion of a carrier according to one of the preceding claims.

8. A calculation device for the navigation system of a carrier incorporating at least one navigation sensor and at least one vision sensor, **characterised in that** it includes means configured to estimate the motion of the carrier in accordance with one of claims 1 to 6.

Figure 1

Figure 2

Figure 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2964774 B1

**Littérature non-brevet citée dans la description**

- **B. FRAPARD et al.** Navigation for Planetary Approach and Landing. *5th International ESA Conférence on Guidance Navigation and Control Systems,* 22 Octobre 2022
- **B. POLIE et al.** Autonomous Navigation Concepts for Interplanetary Missions. *IFAC Symposium on Automatic Control in Aerospace,* 14 Juin 2004
- **X. SEMBÉLY et al.** Mars Sample Return : Optimising the Descent and Soft Landing for an Autonomous Martian Lander. *Symposium on Atmospheric Reentry Vehicles and Systems,* 23 Mars 2005
- **G. BODINEAU et al.** Vision Navigation for European Landers and the NPAL Project. *IFAC Symposium on Automatic Control in Aerospace,* 25 Juin 2007
- **PEER NEUBERT ; PETER PROTZEL ; TERESA VIDAL-CALLEJA ; SIMON LACROIX.** A fast Visual Line Segment Tracker. *IEEE Int. Conf. on Emerging Technologies and Factory Automation,* Septembre 2008
- **S. M. SEITZ ; B. CURLESS ; J. DIEBEL ; D. SCHARSTEIN ; R. SZELISKI.** A Comparison and Evaluation of Multi-View Stéréo Reconstruction Algorithms. *Proc. CVPR,* 2006